# EUROPEAN PATENT APPLICATION

(11) **EP 4 846 975 A1**
(43) Date of publication of application: **02.12.2026**
(21) Application number: 26164779.6
(22) Date of filing: 13.03.2026
(51) Int. Cl.: A61C 7/28

(54) **SELF-LIGATING BRACKET WITH A VARIABLE SLOT AND AN APPLICATION METHOD THEREOF**

(30) Priority: 28.05.2025 CN 202510696121
(71) Applicant: Hangzhou Pengwu Medical Equipment Co., Ltd., Hangzhou, Zhejiang 310000 (CN)
(72) Inventor: Yin, Gang, Hangzhou City, Zhejiang Province, 310000 (CN); Wu, Yue, Hangzhou City, Zhejiang Province, 310000 (CN); Liu, Bo, Hangzhou City, Zhejiang Province, 310000 (CN); Wang, Desen, Hangzhou City, Zhejiang Province, 310000 (CN)
(74) Representative: Cabinet Chaillot

(57) **Abstract**

A self-ligating bracket with a variable slot and an application method thereof comprises a bracket base and a locking plate movably clamped on the bracket base; a transversely arranged archwire slot is disposed in a middle of the bracket base for the passage of round archwires or square (or rectangular) archwires during orthodontic treatment; movable blocks for changing the space of the archwire slot are provided on an inner wall of the locking plate. By arranging integrally formed movable blocks on inner wall of the locking plate, the invention enables the movable blocks to actively clamp the archwire during the locking process of the locking plate and the bracket base, especially when square or rectangular archwires are used for torque control. This effectively eliminates the gap between the archwire and slot walls, ensuring that the preset torque and angle information of the bracket can be accurately and fully expressed.

## Description

### 1. Technical Field

The invention relates to the technical field of orthodontic treatment, and specifically relates to a self-ligating bracket for orthodontic therapy; in particular, it relates to a self-ligating bracket capable of dynamically adjusting the effective space of the bracket slot according to the type of archwire used (especially square or rectangular archwires) to achieve more precise mechanical control, as well as a corresponding application method thereof.

### 2. Background Art

In traditional orthodontic treatment, brackets are devices fixed on bracket slot at the surface of teeth, which are used in conjunction with archwires. By applying appropriate force through the archwires to move the teeth, the purposes of correcting dental alignment and occlusal relationships are achieved. As an improved version of traditional brackets, self-ligating brackets have been widely used in recent years due to their advantages such as no need for ligature wires or elastic rings to fix the archwires, simple operation, low friction, and potential to shorten the treatment cycle.

However, existing self-ligating brackets still have some drawbacks during application, especially in the middle and late stages of treatment where precise control of tooth torque and tip is required:
1) The "play" problem caused by fixed bracket slot dimensions: the dimensions of archwire slots of brackets are usually standardized. In the middle and late stages of orthodontic treatment, square or rectangular cross-section archwires are often used to transmit torque for precise control of the labiolingual inclination of teeth. Nevertheless, due to inevitable dimensional tolerances in the manufacturing process of archwires and bracket slots, as well as matching differences among products from different manufacturers, even when a nominally dimensionally matched square/rectangular archwire is placed into the bracket slot, a certain gap (namely "play") still exists between the archwire and the bracket slot walls (especially in the vertical direction). The existence of such play is an inherent defect of traditional fixed-slot brackets, which prevents the preset torque and angle information of the bracket itself from being fully and accurately transmitted to the teeth. The archwire has to rotate by a certain angle within the slot (to overcome the play) before it can effectively contact the slot walls (slot base and slot cover/locking plate) and transmit the torque. This not only reduces the precision and efficiency of mechanical control, but also may lead to insufficient or delayed torque expression, thereby affecting the predictability and stability of the treatment effect.
2) Insufficient adaptability to different archwire sizes and treatment stages: orthodontic treatment is usually carried out in stages. In the initial alignment stage, relatively thin round archwires are commonly used, and it is expected that the archwires can slide in the bracket slots with low friction to achieve rapid dental alignment. In the middle and late stages of root control and torque expression, relatively thick square or rectangular archwires are required, and tight cooperation between the archwires and the bracket slots (ideally zero or near-zero play) is expected to realize precise mechanical control. Existing brackets with fixed slot dimensions are difficult to ideally meet the different requirements of the two stages for the archwire-slot cooperation relationship at the same time.
3) Risk of uncontrolled archwire rotation: especially when small-size archwires are used or the bracket slots are worn, the gap between the archwires and the slot walls increases, which may cause unintended rotation of the archwires within the slots, leading to deviation of the tooth movement direction from the expected trajectory, generating unnecessary side effects, and impairing the treatment effect.

To solve the above problems, particularly to overcome the core technical difficulty of inaccurate torque expression caused by the existence of play when square/rectangular archwires are used in the bracket slots, the invention proposes a self-ligating bracket with a variable slot and an application method thereof, aiming to actively reduce or eliminate the gap between the archwire and the bracket slot when square or rectangular archwires are used through its special structure, realize tight cooperation between the archwire and the bracket slot, thereby accurately transmitting torque information and optimizing the orthodontic treatment process.

### 3. Summary of the Invention

The objective of the invention is to address the problem of play existing when existing self-ligating brackets are used with square or rectangular archwires, which affects the precise expression of torque, and to provide a self-ligating bracket with a variable slot. When the locking plate is closed, the bracket can effectively reduce or eliminate the vertical gap of the archwire (especially square/rectangular archwires) in the bracket slot through movable components, realize tight cooperation between the archwire and the bracket slot, and thus accurately transmit torque information. Meanwhile, the invention also provides an application method for orthodontic treatment using the bracket to give full play to its advantages.

The technical scheme adopted by the invention is as follows:
A self-ligating bracket with a variable slot comprises a bracket base and a locking plate movably clamped on the bracket base; a transversely arranged archwire slot is disposed in a middle of the bracket base for the passage of round archwires or square (or rectangular) archwires during orthodontic treatment; it is characterized in that movable blocks for changing the space of the archwire slot are provided on an inner wall of the locking plate.

Preferably, the movable blocks are designed such that when the locking plate is closed, surfaces (working surfaces) thereof facing the archwire slot can actively enter the space above the archwire slot according to the type and size of the archwire placed in the archwire slot; especially when a square or rectangular archwire is placed, the movable blocks exert a certain pressure on the archwire or occupy part of the space, thereby effectively reducing the vertical gap (play) between the archwire and a top of the archwire slot, and realizing active clamping of the archwire or forming a closer fit relationship.

Preferably, two movable blocks are symmetrically arranged on both sides of the locking plate and integrally formed with the locking plate; this symmetrical design helps to apply uniform force to the archwire, reducing the inclination or rotation of the archwire caused by uneven stress.

Preferably, the movable blocks are in the shape of L-shaped hooks for tightly engaging with a T-shaped locking part on the bracket base; the L-shaped structure not only enhances the reliability of locking, but also enables an inner surface (working surface) of specific shape to form effective surface contact or near-surface contact with a flat upper surface of the square or rectangular archwire when locked. This tight surface contact actively formed by the movable blocks is the key to achieving precise torque expression, which ensures that the torque information can be instantly and fully transmitted from the bracket to the archwire, significantly outperforming the point-line contact and delayed expression in the presence of play in traditional brackets.

Preferably, side edges are symmetrically arranged on both sides of the bracket base, sliding grooves are provided on inner side walls of the side edges, and step protrusions matching the sliding grooves are provided on both sides of the locking plate, allowing the locking plate to slide open and close on the bracket base.

Preferably, the T-shaped locking part is disposed in the middle of the bracket base between two side edges, and a protruding part is provided on a front surface of the T-shaped locking part.

Preferably, a middle part of the protruding part is arc-shaped and convex, and a hanging groove is provided at its tail part. This structure cooperates with a roller to realize smooth opening and locking of the locking plate.

Preferably, a stop block is further provided in a middle of an inner wall of the locking plate, and the stop block together with movable blocks defines the movement space of the roller and cooperates to realize the locking function.

Preferably, the roller is made of an elastic material. For example, medical polymer materials such as polyetheretherketone (PEEK) or similar materials with good biocompatibility, wear resistance and moderate elasticity are adopted to ensure long-term stability, smooth operation and durability of the locking mechanism.

The invention also provides an application method for orthodontic treatment using the above-mentioned self-ligating bracket with a variable slot, comprising the following steps:
Step S1: in the initial alignment stage of orthodontic treatment, select a round archwire and place it into the archwire slot, then close the locking plate. At this time, the movable blocks may only form point/line contact with the round archwire or have a gap, allowing the archwire to slide in the slot with low friction, so as to achieve rapid alignment and leveling of the teeth;
Step S2: in the middle and late stages of orthodontic treatment where torque and tip control are required, replace with a square or rectangular archwire and place it into the archwire slot, then close the locking plate. At this time, working surfaces of the movable blocks actively press an upper surface of the square or rectangular archwire, effectively eliminating or significantly reducing the vertical play between the archwire and the slot, forming a tight fit (such as surface contact), ensuring that the preset torque and angle information of the bracket can be accurately and fully expressed, and realizing precise control over the root and crown posture of the teeth;
Step S3: in the fine adjustment/finishing stage of orthodontic treatment, square or rectangular archwires of different sizes can be selected as needed; by utilizing the adaptability and clamping effect of the movable blocks on the archwire, precise fine-tuning of the position of individual teeth is achieved; working surfaces of the movable blocks form surface contact or near-surface contact with the upper surface of the square or rectangular archwire, thereby enabling instant and full transmission of torque force.

The invention endows the self-ligating bracket with the capability of dynamically changing the effective space of the archwire slot by innovatively arranging integrally formed movable blocks on an inner wall of the locking plate, combined with a corresponding application method. Its core advantages and innovativeness are reflected as follows:
1. Proactively eliminate play to achieve precise torque expression: different from the prior art that passively accepts the existence of play or relies on special archwires/auxiliary devices, the core innovation of the invention lies in the active action of the movable blocks. In the middle and late stages of orthodontic treatment, when square or rectangular archwires are used, closing the locking plate will cause the movable blocks (especially their L-shaped working surfaces) to actively press downward and occupy the space above the archwires, exerting a certain preload on the archwires to firmly clamp the square/rectangular archwires in the archwire slot. This actively and effectively eliminates or greatly reduces the vertical play between the archwires and the slot walls (particularly between the working surface of the movable block on the slot top and the slot bottom). The tight (even surface-contact) fit achieved by the bracket structure itself enables the precisely preset slot angles (including torque and tip information) of the bracket base to be transmitted to the archwires instantly, losslessly, and with high fidelity, and then to the teeth. This fundamentally solves the key technical problem of delayed, insufficient, or inaccurate torque expression caused by play in traditional brackets, realizing unprecedented precise control over the three-dimensional position of teeth (especially rotation and inclination), which is the key innovative point of the invention compared with the prior art.
2. Optimize the orthodontic process to adapt to different treatment stages: initial alignment stage (using round archwires): the bracket of the invention also performs well in the initial stage. When relatively thin round archwires are used, the intervention of the movable blocks is relatively minimal, resulting in a relatively loose slot space that allows the archwires to slide in the slot with relatively low friction. This facilitates rapid alignment and leveling of teeth, meeting the requirements of early-stage treatment. Middle and late control stages (using square/rectangular archwires): the advantages of the invention are fully demonstrated at this stage. The movable blocks exert their core function of eliminating play, and by clamping the archwires, "lock" the archwires in a working state that enables precise torque transmission, achieving high-precision mechanical control (such as torque expression). This design allows the same bracket to exhibit different mechanical properties that are more suited to the requirements of different treatment stages.
3. Enhance stability and reduce the risk of uncontrolled movement: the active and effective retention of archwires (especially square/rectangular archwires) by the movable blocks reduces unintended rotation and sliding of the archwires in the slot, improving the stability of the archwire-bracket system. Particularly during torque transmission, it prevents uncontrolled rotation caused by play and reduces the risk of treatment deviations.
4. Integrated structure and simple operation: the movable blocks are integrally formed with the locking plate, and their play-eliminating function is built into the bracket's own structure, eliminating the need for clinicians to perform additional operations or use auxiliary components. Clinicians only need to open and close the locking plate of the self-ligating bracket in a conventional manner to realize dynamic adjustment of the slot space and precise mechanical control functions.

In summary, through its unique movable block design and corresponding application method, the invention innovatively solves the common play problem of self-ligating brackets when used with square/rectangular archwires. It realizes proactive play elimination structurally, significantly improves the accuracy of torque and angle control, while simultaneously meeting the needs of different treatment stages, and enhances the predictability and efficiency of the overall orthodontic effect.

### 4. Brief Description of Accompany Drawings

FIG. 1 is a structural diagram of a self-ligating bracket with a variable slot;
FIG. 2 is a structural diagram of a bracket base in a self-ligating bracket with a variable slot;
FIG. 3 is a structural diagram of a locking plate in a self-ligating bracket with a variable slot;
FIG. 4 is a side view of the locking plate in a self-ligating bracket with a variable slot;
FIG. 5 is a left view of a self-ligating bracket with a variable slot;
FIG. 6 is a schematic flow chart of the application of a self-ligating bracket with a variable slot in different orthodontic stages.

In the drawings: 1. bracket base; 2. locking plate; 11. adhesive plate; 12. archwire slot; 13. T-shaped locking part; 14. side edge; 15. protruding part; 21. movable block; 22. roller; 23. stop block; 24. step protrusion.

### 5. Specific Embodiment of the invention

In order to make the objectives, technical solutions, and advantages of the invention clearer, the invention will be described in further detail below with reference to the accompanying drawings and embodiments. It should be understood that the specific embodiments described herein are only used to explain the invention and are not intended to limit the invention.

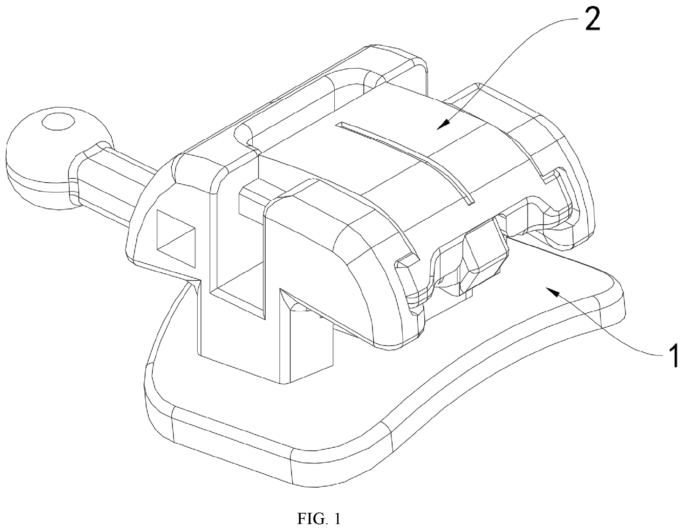

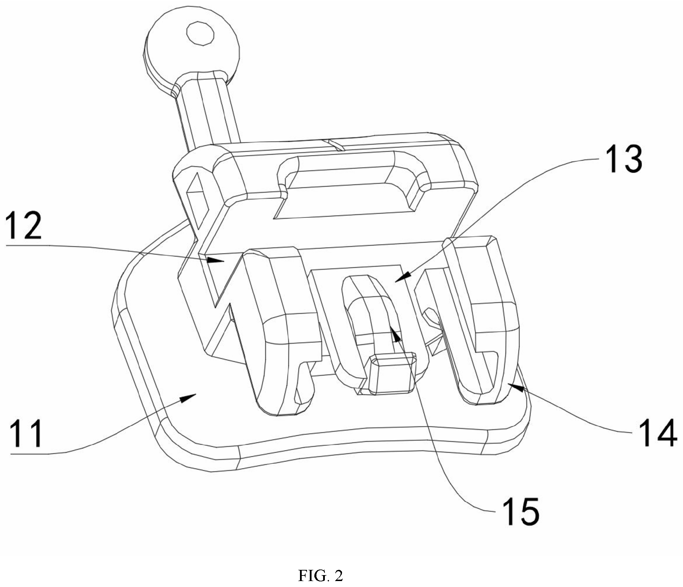

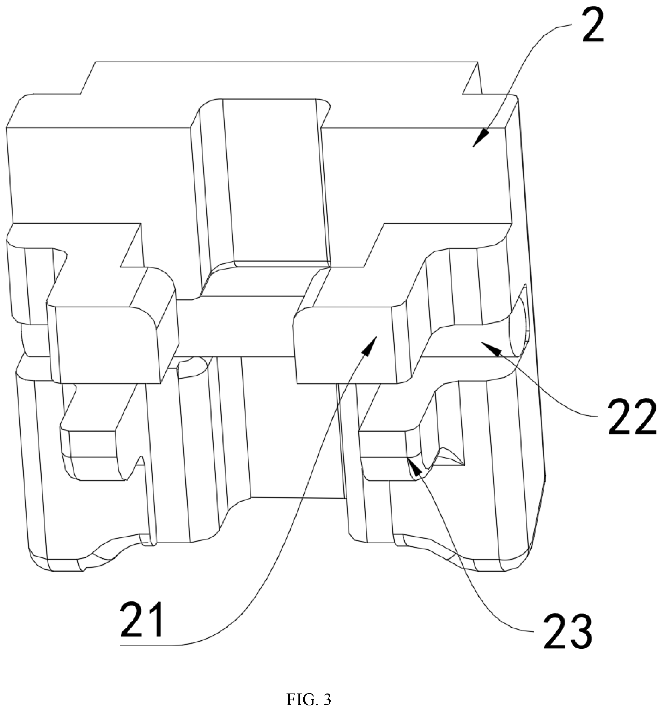

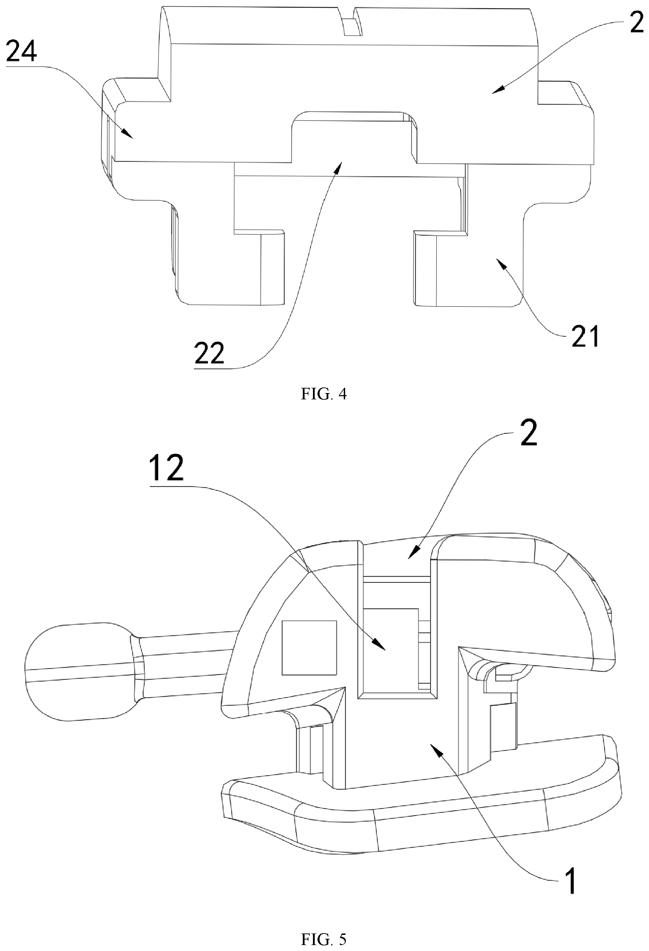

Referring to FIG. 1 to FIG. 5, a self-ligating bracket with a variable slot includes a bracket base 1 and a locking plate 2 movably clamped on the bracket base 1.

An adhesive plate 11 is provided at a bottom of the bracket base 1, and the entire bracket is bonded to a surface of a patient's tooth through the adhesive plate 11 during use.

An archwire slot 12 is transversely provided in a middle of the bracket base 1 for accommodating the passage of round archwires or square/rectangular archwires during orthodontic treatment; a bottom surface and side walls of the archwire slot 12 are preset with specific angles according to different orthodontic systems for transmitting force and torque.

Movable blocks 21 for changing the effective space of the archwire slot 12 are provided on an inner wall of the locking plate 2. Preferably, two movable blocks 21 are symmetrically arranged on both sides of the locking plate 2 and integrally formed with the locking plate 2, ensuring structural stability and production consistency. The movable blocks 21 are preferably designed in the shape of L-shaped hooks. The design of this L-shaped structure has dual functions: on the one hand, the hook portion can form a firm lock with the T-shaped locking part 13 on the bracket base 1, enhancing the reliability of locking; on the other hand, an inner surface (working surface) facing the archwire slot 12 is precisely designed. When the locking plate 2 is closed and a square or rectangular archwire is placed in the archwire slot 12, the working surface can form a tight fit with an upper surface of the archwire, for example, actively pressing downward to form surface contact or near-surface contact. This tight fit can effectively eliminate or greatly reduce the gap (play) between the archwire and a slot top. Specifically, when the locking plate 2 is closed, the movable blocks 21 move downward, and their working surfaces directly act on upper surface of the square/rectangular archwire, exerting a downward pressure to press the archwire against a slot bottom, thereby filling the original vertical play. In this way, when the archwire is stressed or tends to rotate due to its own elasticity (to transmit torque), it can almost immediately contact the movable blocks 21 and the slot bottom/slot walls, thereby accurately transmitting the torque to the bracket and then to the teeth. For round archwires, due to their cross-sectional shape, the intervention degree of the movable blocks 21 is relatively small, possibly only forming point or line contact, retaining the necessary sliding gap to facilitate sliding alignment of teeth.

Side edges 14 are symmetrically provided on both sides of the bracket base 1, and sliding grooves are provided on inner side walls of the side edges 14; step protrusions 24 matching the sliding grooves are provided on both sides of the locking plate 2; the locking plate 2 slides in the sliding grooves through the step protrusions 24 to achieve opening and closing movements relative to the bracket base 1, so as to expose or close the archwire slot 12.

A T-shaped locking part 13 is provided in the middle of the bracket base 1 between the two side edges 14; a protruding part 15 is provided on a front surface of the T-shaped locking part 13; a middle part of the protruding part 15 is arc-shaped and convex, and a hanging groove is provided at its tail part. This structure is used to cooperate with a roller 22 and the L-shaped movable blocks 21 on the locking plate 2 to realize locking and unlocking of the locking plate.

A stop block 23 is further provided in a middle of an inner wall of the locking plate 2. As a limiting structure for the roller 22, the stop block 23, together with the movable blocks 21, ensures that the roller 22 rolls at the correct position and achieves locking. The roller 22 is usually made of an elastic material, such as polyetheretherketone (PEEK). PEEK material has good biocompatibility, wear resistance, and moderate elasticity, ensuring the long-term stability and smooth operation of the locking device.

The roller 22 is a key component for realizing smooth sliding and locking of the locking plate, the movable blocks 21 are the core components for realizing the variable slot function, and the stop block 23 assists in positioning the roller. These components and their interactions together constitute the core structure and functional basis of the invention, ensuring the realization of the functions.

### Working process:

Closing the locking plate: when it is necessary to fix the archwire in the archwire slot 12, slide the locking plate 2 to the closed position. During this process, the roller 22 will pass over a middle of the arc-shaped protruding part 15 of the T-shaped locking part 13, and finally the L-shaped movable blocks 21 are engaged with the T-shaped locking part 13. Meanwhile, the roller 22 may fall into a certain position at a front end of the protruding part 15 or form stable contact therewith, so that the locking plate 2 is locked. At this time, if a square or rectangular archwire is placed in the archwire slot 12, the working surface of the movable blocks 21 will actively press down on the upper surface of the archwire, effectively reducing or eliminating the play above the archwire, achieving tight retention and precise mechanical transmission.

Opening the locking plate: when it is necessary to replace the archwire, use a special tool to apply force to a specific area of the locking plate 2 (or directly push and pull the locking plate), so that the roller 22 overcomes the elastic force to cross the middle of the protruding part 15 again and move toward the tail part. The locking plate 2 then slides open to expose the archwire slot 12. The hanging groove at the tail part of the protruding part 15 can limit excessive movement of the roller 22 and prevent the locking plate 2 from accidentally detaching from the bracket base 1.

### Embodiment of the application method:

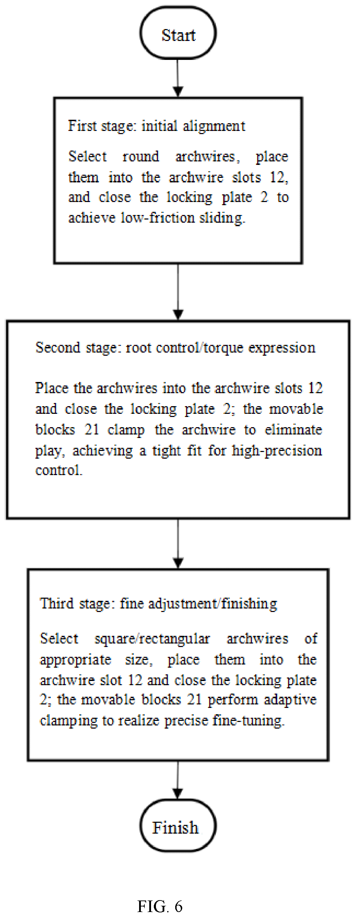

Referring to the flow chart in FIG. 6, the application method of the self-ligating bracket with a variable slot of the invention can be carried out in the following stages:
First stage, step S1: initial alignment
   The goal of this stage is to quickly relieve dental crowding and align the dentition. Select relatively thin round archwires (e.g., 0.014 or 0.016-inch nickel-titanium round archwires) and place them into the archwire slots 12 of the bracket bases 1 on all teeth. Close the locking plate 2. Since round archwires are used, the clamping effect of the movable blocks 21 on them is small, and the archwires can slide freely in the slots with low friction, which is conducive to the rapid movement of teeth to the initial aligned position.
Second stage, step S2: root control/torque expression
   After the teeth are initially aligned, it is necessary to precisely control the root position and crown inclination of the teeth (i.e., torque and tip). At this time, replace with relatively thick square or rectangular archwires (e.g., 0.019×0.025-inch stainless steel square archwires or β-titanium archwires) and place them into the archwire slots 12. Close the locking plates 2. At this point, the L-shaped working surfaces of the movable blocks 21 will actively press down and closely fit (surface contact) the upper surfaces of the square/rectangular archwires, effectively eliminating vertical play. The archwires are firmly fixed in the slots, and the preset torque and tip information of the brackets can be accurately transmitted to the teeth, achieving high-precision control over the tooth posture.
Third stage, step S3: fine adjustment/finishing
   In the later stage of orthodontic treatment, it may be necessary to fine-tune the position of individual teeth, or use rectangular archwires of different sizes for final torque adjustment and arch coordination. At this time, square or rectangular archwires of appropriate sizes can be selected. The design of the movable blocks 21 has a certain adaptability; for square/rectangular archwires within a certain size range, it can still provide effective clamping and control through its elastic deformation or shape fitting, ensuring that the mechanical expression during the fine adjustment stage remains accurate.

The above descriptions are only preferred embodiments of the invention and are not intended to limit the invention. Any modification, equivalent replacement, improvement, etc., made within the spirit and principle of the invention shall be included in the protection scope of the invention.

## Claims

1. A self-ligating bracket with a variable slot, comprising a bracket base and a locking plate movably clamped on the bracket base; a transversely arranged archwire slot is disposed in a middle of the bracket base for the passage of round archwires or square (or rectangular) archwires during orthodontic treatment; movable blocks for changing the space of the archwire slot are provided on an inner wall of the locking plate;
side edges are symmetrically arranged on both sides of the bracket base, sliding grooves are provided on inner side walls of the side edges, and step protrusions matching the sliding grooves are provided on both sides of the locking plate;
a T-shaped locking part is disposed in the middle of the bracket base between two side edges, and a protruding part is provided on a front surface of the T-shaped locking part;
two movable blocks are symmetrically arranged on both sides of the locking plate and integrally formed with the locking plate;
the movable blocks are in the shape of L-shaped hooks for tightly engaging with the T-shaped locking part on the bracket base.

2. The self-ligating bracket with a variable slot of claim 1, wherein a middle part of the protruding part is arc-shaped and convex, and a hanging groove is provided at its tail part.

3. The self-ligating bracket with a variable slot of claim 2, wherein a stop block is further provided in a middle of an inner wall of the locking plate, and a roller is provided between the stop block and movable blocks.

4. The self-ligating bracket with a variable slot of claim 3, wherein the roller is made of an elastic material.

5. An application method of the self-ligating bracket with a variable slot of claim 4, comprising following steps:
step S 1: in the initial alignment stage of orthodontic treatment, select a round archwire and place it into the archwire slot, then close the locking plate, allowing the archwire to slide in the slot with low friction, so as to achieve rapid alignment and leveling of the teeth;
step S2: in the middle and late stages of orthodontic treatment where torque and tip control are required, replace with a square or rectangular archwire and place it into the archwire slot, then close the locking plate, so that working surfaces of the movable blocks actively press an upper surface of the square or rectangular archwire, effectively eliminating or significantly reducing the vertical play between the archwire and the slot, forming a tight fit, ensuring that the preset torque and angle information of the bracket can be accurately expressed;
step S3: in the fine adjustment stage of orthodontic treatment, square or rectangular archwires of different sizes can be selected as needed; by utilizing the adaptability and clamping effect of the movable blocks on the archwire, precise fine-tuning of the position of individual teeth is achieved; working surfaces of the movable blocks form surface contact or near-surface contact with the upper surface of the square or rectangular archwire, thereby enabling instant and full transmission of torque force.
